(19)

Europäisches
Patentamt
European
Patent Office
Office européen
des brevets

(11)  EP 2 379 862 B1

(12)  **EUROPEAN PATENT SPECIFICATION**

(45) Date of publication and mention
of the grant of the patent:
**19.11.2014  Bulletin 2014/47**

(21) Application number: **09827029.1**

(22) Date of filing: **22.12.2009**

(51) Int Cl.:
*F02B 63/04* (2006.01)   *H02J 1/10* (2006.01)

(86) International application number:
**PCT/IB2009/007854**

(87) International publication number:
**WO 2010/073102 (01.07.2010 Gazette 2010/26)**

(54) **COGENERATION SYSTEM**

KRAFT-WÄRME-KOPPLUNGSSYSTEM

SYSTÈME DE COGÉNÉRATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **22.12.2008  IT BO20080766**

(43) Date of publication of application:
**26.10.2011  Bulletin 2011/43**

(73) Proprietors:
• **Energifera S.R.L.
Faenza (Ravenna) (IT)**
• **Zanarini, Sergio
Casalfiumanese (IT)**

(72) Inventor: **ZANARINI, Sergio
Casalfiumanese (IT)**

(74) Representative: **Bergadano, Mirko et al
Studio Torta S.p.A.
Via Viotti, 9
10121 Torino (IT)**

(56) References cited:
**EP-A2- 1 959 536     WO-A1-2008/089571
WO-A1-2008/130968   GB-A- 2 318 000
JP-A- 2000 054 913    US-A- 5 969 435**

**Description**

TECHNICAL FIELD

The present invention relates to a cogeneration system for the simultaneous production of alternating electric energy and thermal energy, and in particular to a micro-cogeneration system.

BACKGROUND ART

A cogeneration system for the simultaneous production of alternating electric energy and thermal energy comprising a power-modulating micro-cogeneration system particularly suitable for multi-family housing, small office buildings or hotels is known in the prior art.

Said cogeneration unit comprises: an output port suitable to be connected to an electric load to be supplied with electric power; a rotating electric generator for generating alternating electric energy; a combustion engine to maintain the electric generator in rotation; direct electric energy accumulator means; bi-directional electric energy converter means connected between the electric generator, the accumulator means and the output port to enable the flow of electric energy between the generator and the accumulator means and between the accumulator means and the output port; and control means to control the converter means and regulate the electric power generated by the generator by regulating the rotation speed of the combustion engine so that the alternating electric power supplied to the output port follows, instant by instant, the electric power absorbed by the load.

Said cogeneration unit also comprises one or more heat exchangers to recycle the thermal energy produced by the combustion engine, for example by absorbing the heat from the exhaust gas and/or from the engine cooling fluid and heating a heat carrier fluid circulating in a hydraulic circuit which passes through the heat exchangers.

The cogeneration unit is usually connected to the output of the electric power mains so that the electric load is normally supplied by the electric power mains and is only temporarily supplied by the cogeneration unit when no electric power is supplied by the mains, i.e. in the event of a breakdown of the electric power mains or with the cogeneration unit operating in isolation, or when the electric power supplied by the mains is less than the electric power absorbed by said load.

The cogeneration unit described above enables the supply of alternating electric power to be controlled so as to instantaneously follow variations in the electric power absorbed by the load and achieve optimum constant efficiency regardless of the response times of the combustion engine. Slow variations in the power absorbed by the load are compensated for by regulating the rotation speed of the combustion engine and fast variations in the power absorbed by the load are compensated for by drawing electric energy from the accumulator means and converting it, using the converter means, from direct electric energy into alternating electric energy.

The cogeneration unit described above enables the electric power supply to be regulated quickly and instantaneously, but is structured in a way that prevents very high electric power levels from being reached at a reasonable cost: the most powerful version supplies an electric power of not more than approximately 200 kW, which may be insufficient for the dimensions of the systems to be supplied with electricity and heat, for example in multi-family housing typical of city areas. Such a cogeneration unit is known from JP2000054913 for example.

DISCLOSURE OF INVENTION

The object of the present invention is to provide a cogeneration system for the simultaneous production of alternating electric energy and thermal energy and capable of controlling the electric power that is supplied to immediately follow variations in the electric load, which overcomes the drawbacks described above and is, at the same time, simple and inexpensive to provide.

According to the present invention there is provided a cogeneration system for the simultaneous production of alternating electric energy and thermal energy according to that set forth in the appended claims.

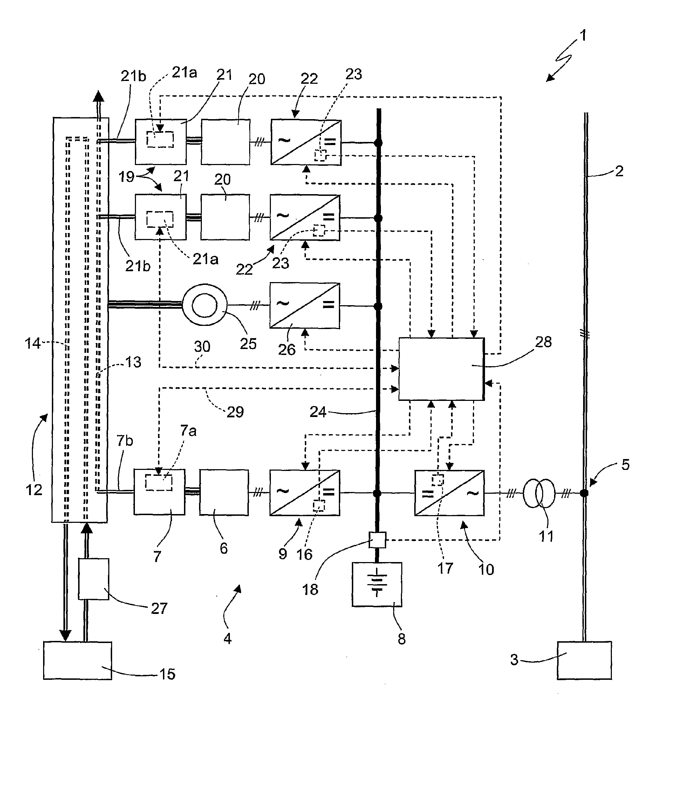

BRIEF DESCRIPTION OF THE DRAWING AND BEST MODE FOR CARRYING OUT THE INVENTION

The present invention will now be described with reference to the single accompanying figure, which schematically illustrates the cogeneration system according to the present invention indicated as a whole by number 1. The cogeneration system 1 is illustrated connected to an electric power mains 2 suitable to supply three-phase alternating electric energy at a mains frequency F to a three-phase electric load 3 consisting of one or more electrical appliances suitable to absorb electric energy at the mains frequency F.

The cogeneration system 1 comprises a cogeneration unit 4, which consists of a modulatable power micro-cogeneration unit of the type substantially known to simultaneously produce three-phase alternating electric energy and thermal energy and comprises an output port 5 suitable to be electrically connected in parallel to the electric power mains 2 and to the electric load 3 to delivery alternating electric energy to the electric load 3 when the electric power mains 2 is unable to satisfy the demand for power of the electric load 3 or when the electric power mains 2 is out of order or does not exist (cogeneration system 1 operating in isolation).

For the sake of clarity, in the following description, the electric power supplied by the electric power mains 2 is indicated by the letters PB, the electric power supplied by the cogeneration system 1 through the output port 5 is indicated by the letters PS and the power absorbed by the electric load 3 is indicated by the letters PL.

The cogeneration unit 4 comprises a rotating electric generator 6, which consists, for example, of a three-phase asynchronous motor-generator suitable to produce alternating current electric energy at a frequency L and power PG1 that are variable according to the rotation speed of the electric generator 6, and a combustion engine 7, which consists, for example, of a diesel-powered engine, or of an engine powered by petrol, methane gas or liquid petroleum gas (LPG), suitable to maintain the electric generator 6 in rotation to produce the electric energy. The engine 7 is equipped with an on-board control unit of the type that is known, indicated by 7a, to acquire the operation data of the engine 7 and to control the supply of fuel to the engine 7 in order to regulate the rotation speed of the engine 7 and, thus, regulate the power PG1 generated by the generator 6.

The cogeneration unit 4 also comprises an electric energy accumulator 8, which consists, for example, of a plurality of lead batteries to accumulate direct current electric energy, and two bi-directional inverters of the known type, a first of which is indicated by number 9 and is connected between the accumulator 8 and the electric generator 6 to allow a flow of electric energy from the generator 6 to the accumulator 8 or vice versa, and the second of which is indicated by number 10 and is connected between the accumulator 8 and the output port 5 to allow a flow of electric energy from the accumulator 8 to the output port 5 or vice versa. The output port 5 is connected to the inverter 10 by means of a three-phase voltage transformer 11 so as to adjust the amplitude of the alternating voltage of the electric power mains 2 according to the amplitude of the alternating voltage of the inverter 10.

Lastly, the cogeneration unit 4 comprises a heat exchanger 12 for producing thermal energy by recycling the heat produced by the engine 7, for example by absorbing the heat from the exhaust gas, as illustrated in the accompanying figure, and/or from the engine cooling liquid, and possibly by recycling the heat produced by the generator 6, to heat a heat carrier fluid. Internally the heat exchanger 12 comprises a duct 13 connected to the exhaust 7b of the engine 7 to discharge the exhaust gas and a hydraulic or pneumatic circuit 14, in which the heat carrier fluid circulates and which leads from the heat exchanger 12 to at least one thermal load 15.

The inverters 9 and 10 are controllable preferably, but not necessarily, by means of pulse width modulation (PWM) signals to change the direction of the flow of the electric energy between the generator 6 and the accumulator 8 and, respectively, between the accumulator 8 and the output port 5.

In particular, the inverter 9 is suitable to convert the alternating electric energy at a frequency L into direct electric energy to allow a flow of electric energy from the generator 6 to the accumulator 8, or to convert the direct electric energy into alternating electric energy at a frequency L to allow a flow of electric energy from the accumulator 8 to the generator 6. The flow of direct electric energy from the accumulator 8 to the generator 6 is normally used to supply electric power to the generator 6 for use as the starting motor to start up the combustion engine 7. Likewise, the inverter 10 is suitable to convert the direct electric energy into alternating electric energy at a mains frequency F to allow a flow of electric energy from the accumulator 8 and/or from the inverter 9 to the output port 5, or to convert the alternating electric energy at a mains frequency F into direct electric energy to allow a flow of electric energy from the electric power mains 2 to the accumulator 8, i.e. from the output port 5 to the accumulator 8. The flow of direct electric energy from the output port 5 to the accumulator 8 is normally used to recharge the accumulator 8 using the electric power mains 2.

The inverters 9 and 10 each comprise a respective sensor 16, 17 to detect direct voltage and current in the relative inverter 9, 10. The accumulator 8 is provided with a current sensor 18 consisting, for example, of a current transformer to detect the direct current absorbed or supplied by the accumulator 8.

According to the present invention, the cogeneration system 1 comprises one or more additional cogeneration units 19 (two are illustrated in the accompanying figure), each of which comprises a respective rotating electric generator 20 for generating alternating current electric energy with a pre-defined electric power PG2 and a respective combustion engine 21, for example of the same type as the engine 7, to maintain the generator 20 in rotation at a pre-defined speed. The cogeneration system 1 comprises one or more inverters 22, each of which is associated with a respective generator 20 and is connected between the generator 20 and the accumulator 8 to allow a flow of electric energy from the generator 20 to the accumulator 8 or vice versa. Each inverter 22 is preferably, but not necessarily, integrated inside the relative cogeneration unit 19. Each engine 21 is provided with a respective on-board engine control unit, indicated by 21a, to control the supply of fuel to the engine 21 and has a respective exhaust 21b connected to the duct 11 of the heat exchanger 12.

Each inverter 22 is of the same type as the inverter 9 of the cogeneration unit 4 and operates in the same way as the inverter 9. In particular, each inverter 22 is suitable to convert the alternating electric energy at a frequency L into direct electric energy to allow a flow of electric energy from the generator 20 to the accumulator 8, or the direct electric energy into alternating electric energy at a frequency L to allow a flow of electric energy from the accumulator 8 to the generator 20. The flow of direct electric energy from the accumulator 8 to the generator 20 is used to supply electric power to the respective generator 20 so as to use it as the starting motor to start up the respective combustion engine 21. Moreover, each inverter 22 comprises a respective sensor 23 for detecting direct voltage and current in the inverter 22.

The inverters 9, 10 and 22 are provided with respective direct current terminals (not illustrated) connected to a direct current bus 24, which is connected to the accumulator 8. The direct current bus 24 combines the power generated by the generators 6 and 20 in direct current.

The cogeneration system 1 also comprises a pump 25 consisting, for example, of an electric rotary pump, which is installed on a point in the hydraulic circuit 14 of the heat exchanger 12 to make the heat carrier fluid circulate, an additional inverter 26 connected to the direct current bus 24 to draw electric energy from the accumulator 8 and supply electric power to the pump 25, and an air cooler 27 arranged outside the heat exchanger 12 on a point of the return branch of the hydraulic circuit 14 to cool the heat carrier fluid if the heat produced by the heat exchanger 12 is not absorbed by the thermal load 15.

The cogeneration system 1 comprises a supervision unit 28, which is connected to the sensors 16-18 and 23 to acquire the voltage and current values in the inverters 9, 10, 22 and in the accumulator 8, is connected to the control unit 7a by means of a communication bus 29 to acquire the operation data of the engine 7 and control the supply of fuel to the engine 7 and is connected to the control units 21a by means of respective communication buses 30 to control the supply of fuel to the engines 21. The communication buses 29 and 30 are of the serial type, for example operating in accordance with the CAN (Controller Area Network) standard.

The supervision unit 28 is configured to regulate the power PG1 generated by the generator 6 by appropriately controlling the inverters 9 and 10 and the control unit 7a and to control the switching on and the switching off of the cogeneration units 19 one at a time by appropriately controlling the inverters 22 and the control units 21a, in such a way that the power PS supplied by the output port 5 follows in real time the variations in absorption of electric power by the electric load 3, and in particular the difference in power between the power PL absorbed by the electric load 3 and the power PN supplied by the electric power mains 2. In particular, the supervision unit 28 is configured to regulate the power PG1 and to switch on and switch off the cogeneration units 19 as a function of the voltage and current values acquired and the operation data of the engine 7. The supervision unit 28 is suitable to start the engine 7 by appropriately controlling the inverters 9 and 10 and to regulate the power PG1 by regulating, via the control unit 7a, the rotation speed of the engine 7. Moreover, the supervision unit 28 is suitable to switch on and switch off the cogeneration units 19 by starting and, respectively, stopping the respective engines 21. In particular, the engines 21 are started up by appropriately controlling the relative inverters 22 and stopped by means of commands sent to the respective control units 21a.

The supervision unit 28 is also configured to control the pump 25 via the inverter 26 to vary the flow rate of the heat carrier fluid in the hydraulic circuit 14 of the heat exchanger 12 as a function of the power PG1 generated by the generator 6 and the number of engines 21 that have been switched on so that the heat exchanger 12 supplies heat at a pre-defined temperature. Moreover, the supervision unit 28 is configured to control the use of the radiator 27 so as to maintain the heat carrier fluid at said pre-defined temperature regardless of the heat absorbed by the thermal load 15.

The supervision unit 28 comprises a microprocessor which is programmed to control the switching on of the engines 7 and 21 and to regulate the rotation speed of the engine 7 according to the following logic.

The supervision unit 28 periodically measures, on the basis of the voltage and current values acquired by the sensors 16-18 and 23, the difference in power between the power PL absorbed by the electric load 3 and the power PN supplied by the electric power mains 2. It is worth noting that the power PN is always equal to the power PL until the electric power mains 2 reaches a maximum nominal power, indicated hereinafter by PNmax. Moreover, if the cogeneration system 1 is operating in isolation (with no electric power mains 2), the measured difference in power is equal to the power PL absorbed by the electric load 3.

As soon as the measured difference in power is other than zero, i.e. when the power PL exceeds the power PN, the inverters 9 and 10 are controlled so as to start the engine 7 and bring it to the required speed. More in detail, the supervision unit 28 controls the inverters 9 and 10 so that the electric energy stored in the accumulator 8 flows towards the generator 6, which, thus supplied, acts as a starting motor to immediately start the engine 7 and at the same time towards the output port 5 to immediately supply the difference in power requested by the electric load 3 (PL-PN). When the engine 7 has reached a minimum speed of rotation, the supervision unit 28 controls the inverter 9 so as to invert the flow of electric energy between the generator 6 and the accumulator 8 so that the electric energy produced by the generator 6 is normally used by the inverter 10 to supply the power PS.

At this stage, the supervision unit 28 controls the supply of fuel to the engine 7 by acting on the control unit 7a to regulate the rotation speed of the engine 7 as a function of the difference between the measured power and the power PG1 actually generated by the generator 6. In this way, the power PG1 is regulated as a function of variations in the absorption of electric power by the electric load 3. The value of the actual power PG1 that is generated is calculated on the basis of the operation data of the engine 7 acquired by the control unit 7a, for example by deducting the electric power PG1 from the mechanical power generated by the engine 7.

When the power PG1 supplied by the generator 6 exceeds a maximum nominal power, indicated hereinafter by PG1max, the supply of fuel to the engine 7 is cut to bring the engine 7 to the minimum rotation speed, the engine 21 of a first of the cogeneration units 19 is started, synchronously with the reduction in speed of the engine 7, to make the respective generator 20 rotate in order to generate the power PG2 and the rotation speed of the engine 7 is immediately regulated as a function of the measured difference in power so as to adjust the power PG1 to a new value that, combined with the power PG2, satisfies the absorption of power by the electric load 3. The power PG1 generated by the generator 6 and the power PG2 generated by the generator 20 which has been switched on are thus combined in direct current on the direct current bus 24 and, thus, the power PS supplied by the output port 5 is:

$$PS = PG1 + PG2.$$

The engine 21 is switched on in the same way as the engine 7, i.e. the respective inverter 22 is controlled so as to use the respective generator 20 as the starting motor to start the engine 21.

Each subsequent increase in the measured difference in power is compensated for simply by regulating the power PG1, i.e. controlling the engine 7, until the power PG1 exceeds the maximum nominal power PG1max again. When, on the other hand, the measured difference in power falls to below the power PG2, the supervision unit 28 orders the control unit 21a of the engine 21 to cut the supply of fuel to stop said engine 21 and, synchronously, rapidly regulates the rotation speed of the engine 7 as a function of the measured difference in power so as to adjust the power PG1 to a new value that, combined with the power PG2, satisfies the absorption of power by the electric load 3. The fuel supply to the engine 21 is cut off gradually so that the engine 21 stops gently to prevent voltage drops on the direct current bus 24.

If an engine 21 has already been switched on and the power PG1 exceeds the maximum nominal power PG1max again, the engine 7 is brought back to the minimum rotation speed, the engine 21 of the second cogeneration unit 19 is switched on synchronously with the reduction in the rotation speed of the engine 7 and the rotation speed of the engine 7 is immediately regulated as a function of the measured difference in power in order to adjust the power PG1 to a new value that, combined with the power generated by the generators 20 that are switched on, satisfies the absorption of power by the electric load 3. Thus, the power PS supplied by the output port 5 is

$$PS = PG1 + 2 \cdot PG2.$$

Thus, the power PG1 is also regulated simultaneously whenever a cogeneration unit is switched on or switched off so that the power PS can immediately follow the variations in absorption by the electric load 3.

It is worth noting that the accumulator 8 enables the supply of power PS that immediately follows, i.e. with a delay in the region of a few milliseconds, the difference in power between the power PL absorbed by the electric load 3 and the power PN supplied by the electric power mains 2 in that-the accumulator 8 allows electric energy to be supplied during the down times between the switching off and switching on of the various engines 7 and 21.

From the above description, it is clear that the control logic with which the supervision unit 28 is programmed can simply be extended in the case of a cogeneration system 1 comprising a generic number N (N>2) of cogeneration units 19 connected with the respective inverters 22 to the direct current bus 24. The maximum power that can be supplied by the cogeneration system 1 is thus:

$$PSmax = PG1max + N \cdot PG2.$$

In the example of the embodiment illustrated in the accompanying figure N is equal to 2.

According to an alternative embodiment of the invention that is not illustrated, each engine 21 is switched on and switched off by directly controlling a control unit mounted on-board the engine 21.

According to a further alternative embodiment of the invention that is not illustrated, each of the inverters 9, 10 and 22 comprises a respective additional sensor to detect alternating voltage and current in the relative inverter 9, 10, 22. The supervision unit 28 is configured to measure the difference in power between the power PL absorbed by the electric load 3 and the power PN supplied by the electric power mains 2 also on the basis of the alternating voltages and currents acquired, in order to improve the accuracy of the measurement.

The main advantage of the cogeneration system 1 described above is that it provides a modular structure that can easily be extended by connecting a desired number of standard cogeneration units 19, i.e. of the type that generate a fixed electric power, to the direct current bus 24 via respective inverters 22. The number of cogeneration units 19 depends on the desired maximum power supply PSmax.

**Claims**

1. Cogeneration system for the simultaneous production of alternating electric energy and thermal energy comprising: a first cogeneration unit (4), which comprises an output port (5) suitable to be connected to an electric load (3), a first electric generator (6) to generate alternating electric energy with a first electric power (PG1), direct electric energy accumulator means (8), and first electric energy converter means (9) connected between the first electric generator (6) and the accumulator means (8) to enable a flow of electric energy towards the accumulator means (8);

at least one second cogeneration unit (19), which comprises a respective second electric generator (20) to generate alternating electric energy with a second pre-defined electric power (PG2) and respective second electric energy converter means (22) connected between the second electric generator (20) and the accumulator means (8) to enable a flow of electric energy towards the accumulator means (8); third electric energy converter means (10) connected between said accumulator means (8) and the output port (5) to allow a flow of electric energy towards the output port (5); and control means (16-18, 23, 7a, 21a, 28-30) to regulate said first electric power (PG1) as a function of absorption of electric power by the electric load (3) ; the cogeneration system (1) being **characterized in that** said control means (16-18, 23, 7a, 21a, 28-30) are configured to control the switching on and off of the second cogeneration unit (19) as a function of the value of said first electric power (PG1) and of the absorption of electric power by the electric load (3) and, at the same time, to regulate said first electric power (PG1) so that the cogeneration system (1) supplies, through the output port (5), a third electric power (PS) with such a value to follow in real time the variations in absorption of electric power by the electric load (3).

2. Cogeneration system according to Claim 1, wherein said first cogeneration unit (4) comprises a first combustion engine (7) to maintain said first electric generator (6) in rotation; said control means (16-18, 23, 7a, 21a, 28-30) being suitable to regulate the rotation speed of the combustion engine (7) to regulate said first electric power (PG1).

3. Cogeneration system according to Claim 2, wherein said control means (16-18, 23, 7a, 21a, 28-30) comprise a first control unit (7a) mounted on-board said first combustion engine (7) to control the operation of the first combustion engine (7) and a supervision unit (28) connected to the first control unit (7a) by a first communication bus (29) and configured to regulate the rotation speed of the first combustion engine (7) as a function of said absorption of electric power by the electric load (3).

4. Cogeneration system according to Claim 3, wherein said supervision unit (28) is configured to regulate the rotation speed of said first combustion engine (7) by controlling the supply of fuel to the first combustion engine (7) using said first control unit (7a).

5. Cogeneration system according to Claim 3 or 4, wherein said supervision unit (28) is configured to acquire operation data of said first combustion engine (7) from said first control unit (7a) and to determine said value of said first electric power (PG1) as a function of the operation data acquired.

6. Cogeneration system according to any one of Claims 1-5, wherein said first cogeneration unit (4) comprises a first combustion engine (7) to maintain in rotation said first electric generator (6), which is an electric motor-generator; said first electric energy converter means (9) being suitable to allow a flow of electric energy from and to the first generator (6) and said control means (16-18, 23, 7a, 21a, 28-30) being suitable to control the first electric energy converter means (9) as a function of said absorption of electric power by the electric load (3) to transform the direct electric energy stored in said accumulator means (8) into alternating electric energy so as to power the first electric generator (6) to start up the first combustion engine (7).

7. Cogeneration system according to Claim 1, wherein said control means (16-18, 23, 7a, 21a, 28-30) are suitable to control said third electric energy converter means (10) as a function of said absorption of electric power by the electric load (3) to transform the direct electric energy stored in the accumulator means (8) into alternating electric energy to be supplied immediately to the output port (5).

8. Cogeneration system according to Claim 7, comprising a direct current bus (24); said first, second and third electric energy converter means (9, 22, 10) and said accumulator means (8) being connected to said direct current bus (24) in such a way that said first electric power (PG1) and said second electric power (PG2) are combined together in direct current on the direct current bus (24).

9. Cogeneration system according to Claims 7 or 8, wherein said control means (16-18, 23, 7a, 21a, 28-30) comprise a plurality of sensors (16-18, 23) to detect direct voltages and currents on said first, second and third electric energy converter means (9, 22, 10) and to detect the direct current absorbed or supplied by the accumulator means (8), and a supervision unit (28) connected to said sensors (16-18, 23) to acquire values of said direct voltages and currents and configured to measure said absorption of electric power by the electric load (3) on the basis of the direct voltage and current values acquired.

10. Cogeneration system according to any one of Claims 1-9, wherein said at least one second cogeneration unit (19) comprises a respective second combustion engine (21) to maintain in rotation said second electric generator (20), which is an electric motor-generator; said second electric energy converter means (22) being suitable to allow a flow of electric energy from and to the second electric generator (20) and said control means (16-18, 23, 7a, 21a, 28-30) being suitable to control the second electric energy converter means (22) as a function of the value of said first electric power (PG1) and of said electric power absorption by the electric load (3) to transform the direct electric energy stored in said accumulator means (8) into alternating electric energy so as to power the second electric generator (20) to start up the second combustion engine (21).

11. Cogeneration system according to any one of Claims 1-10, wherein said first control means (16-18, 23, 7a, 21a, 28-30) comprise at least a second control unit (21a) mounted on-board said second combustion engine (21) to control the supply of fuel to the second combustion engine (21) and a supervision unit (28) connected to the second control unit (21a) by means of a second communication bus (30) so the fuel supply can be cut to stop the second combustion engine (21).

12. Cogeneration system according to any one of Claims 1-11, wherein said first cogeneration unit comprises a first combustion engine (7) and said at least one second cogeneration unit (19) comprises a respective second combustion engine (21); the cogeneration system (1) further comprising: heat exchanger means (12), which comprise a circuit (14) wherein a heat carrier fluid circulates and are connected to the exhaust (7b, 21b) of the combustion engines (7, 21) to recycle the heat produced by the combustion engines (7, 21) by heating the heat carrier fluid; an electric pump (25) to circulate the heat carrier fluid in said circuit (14); and fourth electric energy converter means (26) connected between said accumulator means (8) and the electric pump (25) to supply the electric pump (25) with electric power.

13. Cogeneration system according to Claim 12, wherein said control means (16-18, 23, 7a, 21a, 28-30) are suitable to control said fourth electric energy converter means (26) for controlling the electric pump (25) so as to vary the flow rate of said heat carrier fluid in said circuit (14) as a function of the value of said first electric power (PG1) and the switching on or the switching off of said at least one second cogeneration unit (19).

**Patentansprüche**

1. Kraft-Wärme-Kopplungssystem für die gleichzeitige Erzeugung von elektrische Wechselstromenergie und Wärmeenergie, das umfasst: eine erste Kraft-Wärme-Kopplungseinheit (4), die umfasst: einen Ausgangsanschluss (5), der geeignet ist, um einem elektrischen Verbraucher bzw. einer Last (3) verbunden zu werden, einen ersten elektrischen Generator (6), um elektrische Wechselstromenergie mit einer ersten elektrischen Leistung (PG1) zu erzeugen, elektrische Gleichstromenergiespeichermittel (8), die zwischen den ersten elektrischen Generator (6) und die Speichermittel (8) geschaltet sind, und erste elektrische Energiewandlermittel (9), die zwischen den elektrischen Generator (6) und die Speichermittel (8) geschaltet sind, um einen Fluss von elektrischer Energie in Richtung der Speichermittel (8) zu ermöglichen; wenigstens eine zweite Kraft-Wärme-Kopplungseinheit (19), die umfasst: einen jeweiligen zweiten elektrischen Generator (20), um elektrische Wechselstromenergie mit einer zweiten vordefinierten elektrischen Leistung (PG2) zu erzeugen, und jeweilige zweite elektrische Energiewandlermittel (22), die zwischen den zweiten elektrischen Generator (20) und die Speichermittel (8) geschaltet sind, um einen Fluss von elektrischer Energie in Richtung der Speichermittel (8) zu ermöglichen; dritte elektrische Energiewandlermittel (10), die zwischen die Sammlermittel (8) und den Ausgangsanschluss (5) geschaltet sind, um einen Fluss von elektrischer Energie in Richtung des Ausgangsanschlusses (5) zu ermöglichen; und Steuer- bzw. Regelungsmittel (16 - 18, 23, 7a, 21 a, 28 - 30), um die erste elektrische Leistung (PG1) als eine Funktion der Aufnahme von elektrischer Leistung durch die elektrische Last (3) zu regulieren; wobei das Kraft-Wärme-Kopplungssystem (1) **dadurch gekennzeichnet ist, dass** die Steuer- bzw. Regelungsmittel (16 - 18, 23, 7a, 21 a, 28 - 30) konfiguriert sind, um das Ein- und Ausschalten der zweiten Kraft-Wärme-Kopplungseinheit (19) als eine Funktion des Werts der ersten elektrischen Leistung (PG1) und der elektrischen Leistungsaufnahme durch die elektrische Last (3) zu steuern bzw. zu regeln und gleichzeitig die erste elektrische Leistung (PG1) derart zu regulieren, dass das Kraft-Wärme-Kopplungssystem (1) durch den Ausgangsanschluss (5) eine dritte elektrische Leistung (PS) mit einem Wert liefert, um den Änderungen in der elektrischen Leistungsaufnahme durch die elektrische Last in Echtzeit zu folgen.

2. Kraft-Wärme-Kopplungssystem nach Anspruch 1, wobei die erste Kraft-Wärme-Kopplungseinheit (4) einen ersten Verbrennungsmotor (7) umfasst, um den ersten elektrischen Generator (6) rotierend zu halten; wobei die Steuer- bzw. Regelungsmittel (16 - 18, 23, 7a, 21 a, 28 - 30) geeignet sind, die Drehzahl des Verbrennungsmotors (7) zu regulieren, um die erste elektrische Leistung (PG1) zu regulieren.

3. Kraft-Wärme-Kopplungssystem nach Anspruch 2, wobei die Steuer- bzw. Regelungsmittel (16 - 18, 23, 7a, 21 a, 28 - 30) umfassen: eine erste Steuer- bzw. Regelungseinheit (7a), die an Bord des ersten Verbrennungsmotors (7) montiert ist, um den Betrieb des ersten Verbrennungsmotors (7) zu steuern bzw. zu regeln, und eine Überwachungseinheit (28), die durch einen ersten Kommunikationsbus (29) mit der ersten Steuer- bzw. Regelungseinheit (7a) verbunden ist und konfiguriert ist, um die Drehzahl des ersten Verbrennungsmotors (7) als eine Funktion der elektrischen Leistungsaufnahme durch die elektrische Last (3) zu regulieren.

4. Kraft-Wärme-Kopplungssystem nach Anspruch 3, wobei die Überwachungseinheit (28) konfiguriert ist, um die Drehzahl des Verbrennungsmotors (7) durch Steuern bzw. Regeln der Lieferung von Kraftstoff an den ersten Verbrennungsmotor (7) unter Verwendung der ersten Steuer- bzw. Regelungseinheit (7a) zu regulieren.

5. Kraft-Wärme-Kopplungssystem nach Anspruch 3 oder 4, wobei die Überwachungseinheit (28) konfiguriert ist, um Betriebsdaten des ersten Verbrennungsmotors (7) von der ersten Steuer- bzw. Regelungseinheit (7a) zu erlangen und den Wert der ersten elektrischen Leistung (PG1) als eine Funktion der erlangten Betriebsdaten zu bestimmen.

6. Kraft-Wärme-Kopplungssystem nach einem der Ansprüche 1 - 5, wobei die erste Kraft-Wärme-Kopplungseinheit (4) einen ersten Verbrennungsmotor (7) umfasst, um den ersten elektrischen Generator (6), der ein elektrischer Motor-Generator ist, rotierend zu halten; wobei die ersten elektrischen Energiewandlermittel (9) geeignet sind, einen Fluss von elektrischer Energie von dem ersten Generator (6) und zu ihm zuzulassen und die Steuer- bzw. Regelungsmittel (16 - 18, 23, 7a, 21 a, 28 - 30) geeignet sind, um die ersten elektrischen Energiewandlermittel (9) als eine Funktion der elektrischen Leistungsaufnahme durch die elektrische Last (3) zu steuern bzw. zu regeln, um die in den Speichermitteln (8) gespeicherte elektrische Gleichstromenergie in Wechselstromenergie umzuwandeln, um den elektrischen Generator (6) mit Energie zu versorgen, um den ersten Verbrennungsmotor (7) zu starten.

7. Kraft-Wärme-Kopplungssystem nach Anspruch 1, wobei die Steuer- bzw. Regelungsmittel (16 - 18, 23, 7a, 21 a, 28 - 30) geeignet sind, die dritten Energiewandlermittel (10) als eine Funktion der elektrischen Leistungsaufnahme durch die elektrische Last (3) zu steuern bzw. zu regeln, um die in den Speichermitteln (8) gespeicherte elektrische Gleichstromenergie in Wechselstromenergie umzuwandeln, die sofort an den Ausgangsanschluss (5) geliefert werden soll.

8. Kraft-Wärme-Kopplungssystem nach Anspruch 7, das umfasst: einen Gleichstrombus (24); die ersten, zweiten und dritten elektrischen Energiewandlermittel (9, 22, 10) und die Speichermittel (8), die in einer derartigen Weise mit dem Gleichstrombus (24) verbunden sind, dass die erste elektrische Leistung (PG1) und die zweite elektrische Leistung (PG2) auf dem Gleichstrombus (24) zu Gleichstrom kombiniert werden.

9. Kraft-Wärme-Kopplungssystem nach Anspruch 7 oder 8, wobei die Steuer- bzw. Regelungsmittel (16 - 18, 23, 7a, 21 a, 28 - 30) umfassen: eine Vielzahl von Sensoren (16 - 18, 23), um Gleichspannungen und Ströme auf den ersten, zweiten und dritten elektrischen Energiewandlermitteln (9, 22, 10) zu erfassen und um den Gleichstrom zu erfassen, der von den Speichermitteln (8) aufgenommen oder geliefert wird, und eine Überwachungseinheit (28), die mit den Sensoren (16 - 18, 23) verbunden ist, um Werte der Gleichspannungen und Ströme zu erlangen, und die konfiguriert ist, um die elektrische Leistungsaufnahme durch die elektrische Last (3) auf der Basis der erlangten Gleichspannungs- und Stromwerte zu messen.

10. Kraft-Wärme-Kopplungssystem nach einem der Ansprüche 1 - 9, wobei die wenigstens eine zweite Kraft-Wärme-Kopplungseinheit (19) umfasst: einen jeweiligen zweiten Verbrennungsmotor (21), um den zweiten elektrischen Generator (20), der ein Motor-Generator ist, rotierend zu halten; die zweiten elektrischen Energiewandlermittel (22), die geeignet sind, einen Fluss von elektrischer Energie von dem zweiten elektrischen Generator (20) und zu ihm zuzulassen, und die Steuer- bzw. Regelungsmittel (16 - 18, 23, 7a, 21 a, 28 - 30), die geeignet sind, die zweiten elektrischen Energiewandlermittel (22) als eine Funktion des Werts der ersten elektrischen Leistung (PG1) und der elektrischen Leistungsaufnahme durch die elektrische Last (3) zu steuern bzw. zu regeln, um die in den Speichermitteln (8) gespeicherte elektrische Gleichstromenergie in Wechselstromenergie umzuwandeln, um den zweiten elektrischen Generator (20) mit Energie zu versorgen, um den zweiten Verbrennungsmotor (21) zu starten.

11. Kraft-Wärme-Kopplungssystem nach einem der Ansprüche 1 - 10, wobei die ersten Steuer- bzw. Regelungsmittel (16 - 18, 23, 7a, 21 a, 28 - 30) umfassen: wenigstens eine zweite Steuer- bzw. Regelungseinheit (21 a), die an Bord des zweiten Verbrennungsmotors (21) montiert ist, um die Lieferung von Kraftstoff an den zweiten Verbrennungsmotor (21) zu steuern bzw. zu regeln, und eine Überwachungseinheit (28), die mittels eines zweiten Kommunikationsbusses (30) mit der zweiten Steuer- bzw. Regelungseinheit (21 a) verbunden ist, so dass die Kraftstofflieferung unterbrochen werden kann, um den zweiten Verbrennungsmotor (21) zu stoppen.

12. Kraft-Wärme-Kopplungssystem nach einem der Ansprüche 1 - 11, wobei die erste Kraft-Wärme-Kopplungseinheit einen ersten Verbrennungsmotor (7) umfasst und die wenigstens eine zweite Kraft-Wärme-Kopplungseinheit (19) einen jeweiligen zweiten Verbrennungsmotor (21) umfasst; wobei das Kraft-Wärme-Kopplungssystem (1) ferner umfasst: Wärmetauschermittel (12), die einen Kreislauf (14) umfassen, in dem ein Wärmeträgerfluid zirkuliert, und die mit dem Abgaskanal (7b, 21 b) der Verbrennungsmotoren (7, 21) verbunden sind, um die von den Verbrennungsmotoren (7, 21) erzeugte Wärme durch Heizen des Wärmeträgerfluids zurück zu gewinnen; eine elektrische Pumpe (25), um das Wärmeträgerfluid in dem Kreis (14) zu zirkulieren; und vierte elektrische Energiewandlermittel (26), die zwischen die Speichermittel (8) und die elektrische Pumpe (25) geschaltet sind, um die elektrische Pumpe (25) mit elektrischer Leistung zu versorgen.

13. Kraft-Wärme-Kopplungssystem nach Anspruch 12, wobei die Steuer- bzw. Regelungsmittel (16 - 18, 23, 7a, 21 a, 28 - 30) geeignet sind, die vierten elektrischen Energieumwandlungsmittel (26) zum Steuern bzw. Regeln der elektrischen Pumpe (25) zu steuern bzw. zu regeln, um den Durchsatz des Wärmeträgerfluids in dem Kreis (14) als eine Funktion des Werts der ersten elektrischen Leistung (PG1) und des Ein- oder Ausschaltens der wenigstens einen zweiten Kraft-Wärme-Kopplungseinheit (19) zu steuern bzw. zu regeln.

**Revendications**

1. Système de cogénération pour la production simultanée d'énergie électrique alternative et d'énergie thermique comprenant : une première unité de cogénération (4) qui comprend un port de sortie (5) apte à être raccordé à une charge électrique (3), un premier générateur électrique (6) destiné à générer de l'énergie électrique alternative à une première puissance électrique (PG1), des moyens accumulateurs d'énergie électrique continue (8), et des premiers moyens convertisseurs d'énergie électrique (9) raccordés entre le premier générateur d'énergie électrique (6) et les moyens accumulateurs (8) pour permettre un flux d'énergie électrique en direction des moyens accumulateurs (8) ; au moins une deuxième unité de cogénération (19) qui comprend un deuxième générateur électrique respectif (20) destiné à générer de l'énergie électrique alternative à une seconde puissance électrique prédéfinie (PG2) et des deuxièmes moyens convertisseurs d'énergie électrique respectifs (22) raccordés entre le deuxième générateur électrique (20) et les moyens accumulateurs (8) pour permettre un flux d'énergie électrique en direction des moyens accumulateurs (8) ; des troisièmes moyens convertisseurs d'énergie électrique (10) raccordés entre lesdits moyens accumulateurs (8) et le port de sortie (5) pour permettre un flux d'énergie électrique en direction du port de sortie (5) ; et des moyens de commande (16 à 18, 23, 7a, 21a, 29 à 30) destinés à réguler ladite première puissance électrique (PG1) en fonction de l'énergie électrique absorbée par la charge électrique {31} ; le système de cogénération (1) étant **caractérisé en ce que** lesdits moyens de commande (16 à 18, 23, 7a, 21a, 28 à 30) sont configurés pour commander l'activation et la désactivation de la deuxième unité de cogénération (19) en fonction de la valeur de ladite première puissance électrique (PG1) et de l'énergie électrique absorbée par la charge électrique (3) et, en même temps, pour réguler ladite première puissance électrique (PG1) de sorte que le système de cogénération (1) délivre, par l'intermédiaire du port de sortie (5), une troisième puissance électrique (PS) à une valeur permettant de suivre en temps réel les variations de la puissance électrique absorbée par la charge électrique (3).

2. Système de cogénération selon la revendication 1, dans lequel ladite première unité de cogénération (4) comprend un premier moteur à combustion (7) destiné à maintenir ledit premier générateur électrique (6) en rotation ; lesdits moyens de commande (16 à 18, 23, 7a, 21a, 28 à 30) étant aptes à réguler la vitesse de rotation du moteur à combustion (7) afin de réguler ladite première puissance électrique (PG1).

3. Système de cogénération selon la revendication 2, dans lequel lesdits moyens de commande (16 à 18, 23, 7a, 21a, 28 à 30) comportent une première unité de commande (7a) montée à bord dudit premier moteur à combustion (7) pour commander le fonctionnement du premier moteur à combustion (7) et une unité de contrôle (28) raccordée à la première unité de commande (7a) par un premier bus de communication (29) et configurée pour réguler la vitesse de rotation du premier moteur à combustion (7) en de l'énergie électrique absorbée par la charge électrique (3).

4. Système de cogénération selon la revendication 3, dans lequel ladite unité de contrôle (28) est configurée pour réguler la vitesse de rotation dudit premier moteur à combustion (7) en commandant l'alimentation en carburant du premier moteur à combustion (7) à l'aide de la première unité de commande (7a).

5. Système de cogénération selon la revendication 3 ou 4, dans lequel ladite unité de contrôle (28) est configurée pour acquérir des données de fonctionnement dudit premier moteur à combustion (7) provenant de ladite première unité de commande (7a) et pour déterminer ladite valeur de ladite première puissance électrique (PG1) en fonction des données de fonctionnement acquises.

**6.** Système de cogénération selon l'une quelconque des revendications 1 à 5, dans lequel ladite première unité de cogénération (4) comprend un premier moteur à combustion (7) destiné à maintenir en rotation ledit premier générateur électrique (6) qui est un moteur-générateur électrique ; lesdits premiers moyens convertisseurs d'énergie électrique (9) étant aptes à permettre un flux d'énergie électrique depuis et vers le premier générateur (6) et lesdits moyens de commande (16 à 18, 23, 7a, 21a, 28 à 30) étant aptes à commander les premiers moyens convertisseurs d'énergie électrique (9) en fonction de la puissance électrique absorbée par la charge électrique (3) afin de transformer l'énergie électrique continue stockée dans lesdits moyens accumulateurs (8) en énergie électrique alternative de façon à alimenter le premier générateur électrique (6) pour démarrer le premier moteur à combustion (7).

**7.** Système de cogénération selon la revendication 1, dans lequel lesdits moyens de commande (16 à 18, 23, 7a, 21a, 28 à 30) sont aptes à commander lesdits troisièmes moyens convertisseurs d'énergie électrique (10) en fonction de l'énergie électrique absorbée par la charge électrique (3) pour transformer l'énergie électrique continue stockée dans les moyens accumulateurs (8) en énergie électrique alternative destinée à être délivrée immédiatement au port de sortie (5).

**8.** Système de cogénération selon la revendication 7, comprenant un bus à courant continu (24) ; lesdits premiers, deuxièmes et troisièmes moyens convertisseurs d'énergie électrique (9, 22, 10) et lesdits moyens accumulateurs (8) étant raccordés audit bus à courant continu (24) de telle manière que ladite première puissance électrique (PG1) et ladite deuxième puissance électrique (PG2) sont combinées ensemble en courant continu sur le bus à courant continu (24).

**9.** Système de cogénération selon la revendication 7 ou 8, dans lequel lesdits moyens de commande (16 à 18, 23, 7a, 21a, 28 à 30) comprennent une pluralité de capteurs (16 à 18, 23) destinés à détecter les tensions continues et les courants continus sur lesdits premiers, deuxièmes et troisièmes moyens convertisseurs d'énergie électrique (9, 22, 10) et détecter le courant continu absorbé ou délivré par les moyens accumulateurs (8), et une unité de contrôle (28) raccordée auxdits capteurs (16 à 18, 23) pour acquérir des valeurs desdites tensions continues et desdits courants continus et configurée pour mesurer la puissance électrique absorbée par la charge électrique (3) sur la base des valeurs acquises de tension continue et de courant continu.

**10.** Système de cogénération selon l'une quelconque des revendications 1 à 9, dans lequel ladite au moins une deuxième unité de cogénération (19) comprend un deuxième moteur à combustion respectif (21) destiné à maintenir en rotation ledit deuxième générateur électrique (20), qui est un moteur-générateur électrique ; lesdits deuxièmes moyens convertisseurs d'énergie électrique (22) étant aptes à permettre un flux d'énergie électrique depuis et vers le deuxième générateur électrique (20) et lesdits moyens de commande (16 à 18, 23, 7a, 21a, 28 à 30) étant aptes à commander les deuxièmes moyens convertisseurs d'énergie électrique (22) en fonction de la valeur de ladite première puissance électrique (PG1) et de ladite puissance électrique absorbée par la charge électrique (3) pour transformer l'énergie électrique continue stockée dans lesdits moyens accumulateurs (8) en énergie électrique alternative de manière à alimenter le deuxième générateur électrique (20) pour démarrer le deuxième moteur à combustion (21).

**11.** Système de cogénération selon l'une quelconque des revendications 1 à 10, dans lequel lesdits premiers moyens de commande (16 à 18, 23, 7a, 21a, 28 à 30) comprennent au moins une deuxième unité de commande (21a) montée à bord dudit deuxième moteur à combustion (21) pour commander l'alimentation en carburant du deuxième moteur de combustion (21) et une unité de contrôle (28) raccordée à la deuxième unité de commande (21a) à l'aide d'un deuxième bus de communication (30) de sorte que l'alimentation en carburant peut être coupée afin d'arrêter le deuxième moteur à combustion (21).

**12.** Système de cogénération selon l'une quelconque des revendications 1 à 11, dans lequel ladite première unité de cogénération comprend un premier moteur à combustion (7) et ladite au moins une deuxième unité de cogénération (19) comprend un deuxième moteur à combustion respectif (21) ; le système de cogénération (1) comprenant en outre : des moyens échangeurs de chaleur (12) qui comprennent un circuit (14), dans lequel circule un fluide caloporteur, et qui sont raccordés à la sortie d'échappement (7b, 21b) des moteurs à combustion (7, 21) pour recycler la chaleur produite par les moteurs à combustion (7, 21) en chauffant le fluide caloporteur ; une pompe électrique (25) destinée à faire circuler le fluide caloporteur dans ledit circuit (14) ; et des quatrièmes moyens convertisseurs d'énergie électrique (26) raccordés entre lesdits moyens accumulateurs (9) et la pompe électrique (25) pour alimenter la pompe électrique (25) en énergie électrique.

**13.** Système de cogénération selon la revendication 12, dans lequel lesdits moyens de commande (16 à 18, 23, 7a, 21a, 28 à 30) sont aptes à commander lesdits

**EP 2 379 862 B1**

quatrièmes moyens convertisseurs d'énergie électrique (26) pour commander la pompe électrique (25) de manière à faire varier le débit du fluide caloporteur dans ledit circuit (14) en fonction de la valeur de ladite première puissance électrique (PG1) et l'activation ou la désactivation de ladite au moins une deuxième unité de cogénération (19).

**EP 2 379 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000054913 B